# EUROPEAN PATENT APPLICATION

(11) **EP 0 930 004 A2**
(43) Date of publication of application: **21.07.1999**
(21) Application number: 99500009.8
(22) Date of filing: 20.01.1999
(51) Int. Cl.: A01K 1/10

(54) **Cattle feed rack**

(30) Priority: 20.01.1998 ES 9800136 U; 26.01.1998 ES 9800199 U
(71) Applicant: Carne Aragon, SDAD.COOP.LDA, 50058 Zaragoza (ES)
(72) Inventor: Olivan Gascon, Antonio, 50450 Muel - Zaragoza (ES); Riaguas Ruperez, Leticia, 50009 Zaragoza (ES); Munoz Perez, Fernando, Zaragoza (ES); Andueza Urra, Jesus Donato, 31272 Baquedano-Amescoa Baja, Navarra (ES)
(74) Representative: Urizar Anasagasti, José Antonio

(57) **Abstract**

Cattle feed rack of the type of those used to feed stabulated animals, mainly goats ovine or bovine cattle, characterized in that it comprises one or more windows through which the animals introduce their heads in order to have access to the food located behind a grid (9), also characterized in that the grid (9), by means of a safety mechanism or by inertia, keeps in contact with the food, its consumption having to be constant so that the grids (9) move conveniently, to prevent wasting the gross food.

## Description

The present description relates to a cattle feed system of the type used to feed stable animals, preferably goats, ovine, or bovine cattle.

Some types of cattle feed systems for stabulated animals are well known, the most common types being those comprinsin an elongated hopper with inclined sides being defined by a rack, through which the animals introduce their mouths in order to get the foodstuff, with a large portin of said foodstuff falling on a tray wherein the animals select the different food components, whereas part of it is spilled around.

Also known are the typical feed systems for lamb and goat, having a pattern of a substantially elongated channel supported by various legs.

Another system also known as a cattle feed system is the typical feeding trough fixed to a wall, made of masonry or with any other material.

All known systems used as cattle feed for lamb and goat, inseide stables, have the inconvenience of allowing the animals an easy access to the foodstuff, so that, on one hand, the finest ingredients are selected by instinct, while on the other hand the thick components are spilled out during the selection. Therefore, since a large portion of the food is spreaded around, the feeding cost is increased and the food composition is altered, the thick portion being richer in fibres which are essential in the feeding of cattle.

In order to prevent that loss of foodstuff, still keeping the animals free to select the food, the cattle feed rack object of the present invention has been developed, said cattle feed rack comprising two clearly distinctive portions, the stationary sides and the movable device. The stationary sides like parallel walls, with variable length and height, have a profile or guide mounted on its upper edge to bear one or several sliding rollers with the purpose of aiding in the displacement of the movable device, in association with the bearing blocks incorporated into said device, with its frame being provided with a front strut perpendicular to the stationary sides having one or multiple windows through which the cattle will have access to the food, located just behind the parallel rack conveniently spaced from the front windows, the front strut and the rack upper edges being associated by means of several bars, whereas in the bottom edge the anchoring of both elements are connected by means of the bearing blocks and the horizontal extension of profiles configuring the rack. Said device is provided with a safety mechanism mounted at least on one of the device upper guides, to prevent the return of the movable device. Optionally the whole cattle feed rack can be protected by a cover.

when the cattle introduce their heads through the front windows, they have access to the food placed behind the rack, when the food available has been eaten up, the animals by natural instinct will push the front strust which will slide forward by means of bearing blocks and upper rollers, having access to additional food. The food falling onto the horizontal rack will necessarily be eaten by the cattle, being essential that the food tray keeps clean so that the movable device can displace to provide access to additional available food.

An optional embodiment for the cattle feed rack, for ovine and goats cattle, consists of a square or rectangular container, provided with a plurality of legs, with a bottom plate located at a convenient height depending on the type of cattle using said feed rack, both sides having one or more windows with bottom edges matching the cattle necks. A swinging grid frame is provided facing each window, resting on the food, the animals having access to the food through the bars, so that the food is to be eaten in a uniform manner within the feed rack to bring down the grid frame and, therefore, have access to additional food.

The present invention provides, with respect to the known cattle feed systems, the essential advantage of saving considerable amounts of cattle food, for the portion of food spilled out to the floor needs to be eaten in order to have access to the food available behind the grid, what evidently results in a significant saving, also forcing the animals to eat the whole amount of food, i.e., to eat all fibers, also having the advantage that sufficient amount of food can be provided for several day consumption.

In order to beter understand the present invention a practical prefertential embodiment is shown on annex drawing, where:

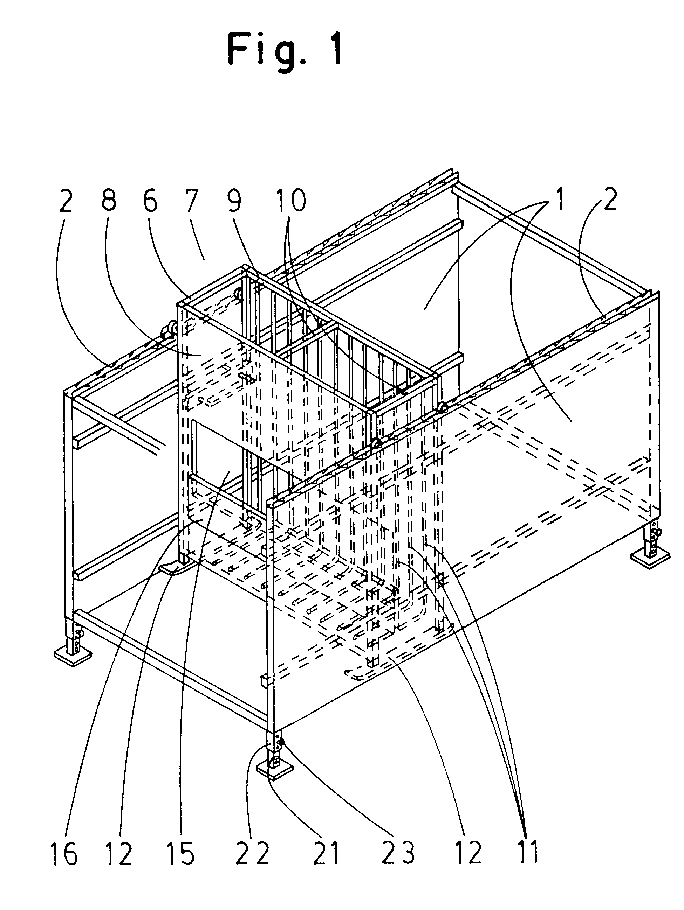

Fig. 1 shows a perspective view of the invention,

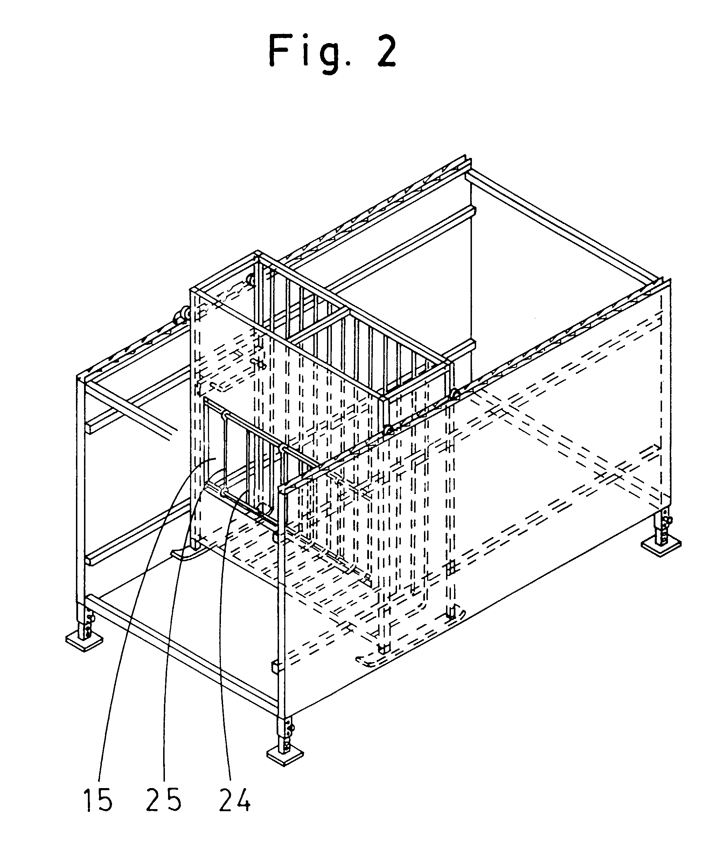

Fig. 2 shows an optional embodiment of a cattle feed rack with an access window for bovine horn cattle;

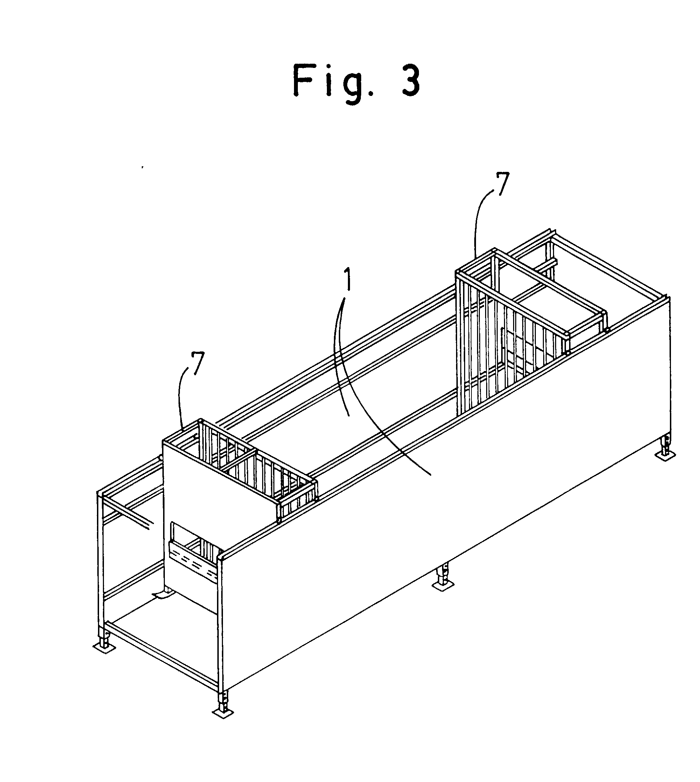

Fig. 3 shows a cattle feed rack of modular shape;

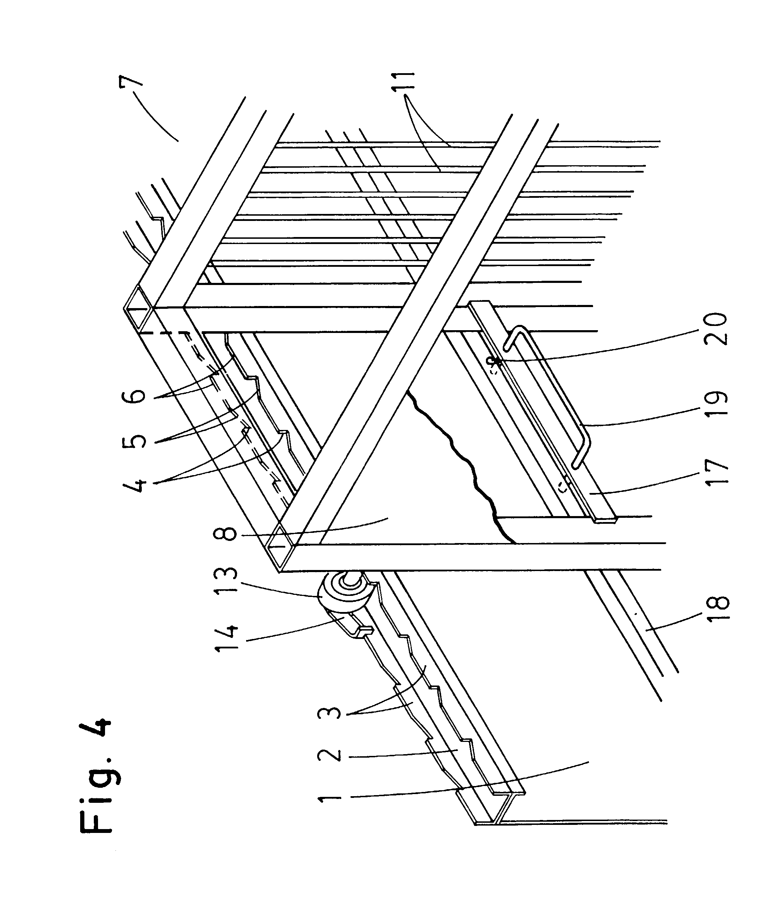

Fig. 4 shows an enlarged detail of the upper rollers and the safety mechanism;

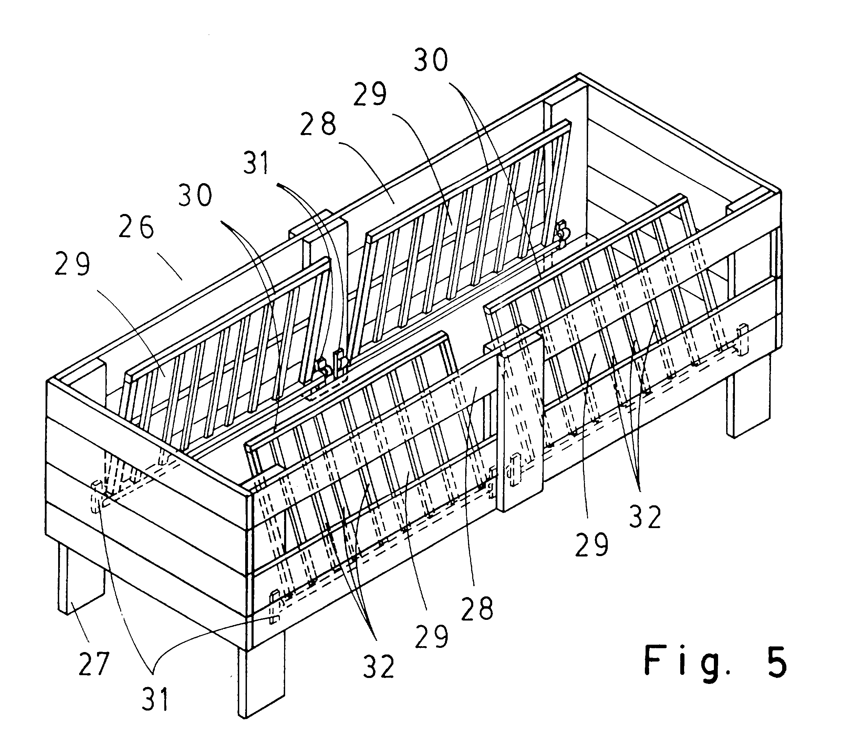

Fig. 5 shows a perspective view of an optional embodiment of the cattle feed rack.

The cattle feed rack comprises, as it can be seen in the figures of reference, two stationary sides (1), as to form variable height masonry or prefabricated walls, said sides (1) having on their upper ends and along them a U shape guide profile (2), preferably made by a cold forming process, arranged in such a manner as to have the vertical struts provided with a series ofsaw teeths (3), covering a short vertical length (4), from where another shape (5) extends up at an angle to reach a maximum height (6), the angled pieces (5) being defined in an opposite manner.

The movable device (7) comprises a square frame, consisting of a front frame (8) and a grid frame (9) conveniently spaced from each other, said elements being associated by means of several bars (10), whereas in the bottom edge the anchoring of said front frame (8) with the grid frame (9) is made by means of square bent bars (11) which also aid to strengthen the movable device (7) the bearing blocks (12), placed on the sides and consisting of strip shapes with raised ends also being used to help in the displacement of the movable device. Said movable device (7) presents a height slightly above the stationary sides (1), holding in the upper ends angles one or more rollers (13), which placed inside the guide shapes (2) also aid to the displacement of said movable device (7) having the said associated rollers (13) in their turning axis a floating latch (14) made of angle strip shape with its shorter wing designed to move over the tooth ramp (3) to fall into the perpendicular portion (4) preventin the displacement of the movable device (7). Said front frame (8) consisting of a square or rectangular frame, with a width corresponding to the gap between said stationary sides (1) whereas its height will be slightly above said stationary sides (1) and a thickness of any standard shape used in the construction thereof. One or multiple windows (15) are provided on said front frame (8) at a convenient height from floor, said height being possibly adjusted by means of a plate (16) which can be moved up and down depending on the cattle height. The grid frame (9), also having a square or rectangular shape, is enclosed with commercial standard shapes, having a particular feature consisting of having a specific grid spaced in accordance with the type of cattle using the feed rack, with bars (11) bent horizontally and associated to the front frame (8) slightly above the floor.

In order to prevent the movable device (7) from being moved upwards when the cattle is being fed, a safety mechanism is provided, which in one of the multiple optional designs consists of a shape (17) located fastened horizontally to one of the sides and at a height corresponding to the longitudinal shapes (18) of stationary sides (1) in such a manner that the handle (19) ends going through the shape (17) are positioned below the longitudinal shape (18) obviously preventing said movable device (7) from moving upwards; in order to secure the positioning of said safety mechanism a latch (20) is provided, which latch is inserted into one handle end (16) to secure the positioning thereof.

In order to adjust the height of stationary sides (1) to the floor and consequently with respect to the movable device (7), the ends of said stationary sides (1) are provided with a regulation mechanism placed on its bottom portion, such as, for example, a square shape (21), having a base, inserted into another similar shape, associated to the stationary side (1), thus providing the anchoring to each other by means of a thru bolt (23) which will be inserted in the holes drilled in both shapes.

when cattle horns require more space, the windows (15) adequately dimensioned might include several fixed spacing bars (24), as well as multiple movable bars (25).

Optionally, the cattle feed rack may be protectd with a cover, so that said feed rack can be located indoors or outdoors, also being possible to place facing the stationary sides (1) and between both of them, two movable devices (7) , thus the food being placed between said elements.

An optional embodiment of the cattle feed rack of the present invention consists ofa container with a square or rectangular base and with a height adequate to the size of animals using said feed rack, being suported by multiple legs (27). One or more windows (29) of variable height will be located on one side (28), said windows being opposite to a grid frame (30) anchored to the respective side (28) bottom by means of two or more hinges (31), said grid frames (30) having a square or rectangular base and a plurality of vertical bars (32), spaced in accordance with the size of cattle using it.

Once the nature ofthe present invention, as well as one embodiment of same have been sufficiently described, it is only to be added that it will be possible to introduce changes in shape, materials and arrangement in the whole or components of same as long as those changes do not substantially affect to the characteristics of the prrsent invention as claimed below.

## Claims

1. Cattle feed rack of the type of those used to feed stabulated animals, mainly goats ovine or bovine cattle, characterized in that it comprises two stationary sides (1) within which there is a movable device (7), said stationary sides being formed as masonry or prefabricated walls, said stationary sides being provided on their upper end with a elongated guide shape (2), designed to house, and provide the sliding of, the rollers (13) wich constitute the movable device (7) defined by a square or rectangular base structure.

2. Cattle feed rack according to previous claim, characterized in that the movable device (7) comprises a front frame (8) formed by a square flat structure, to which a grid frame (9) conveniently spaced and parallel is associated, said grid frame being connected to the front frame (8) in its upper end by means of several shapes (10), whereas the bottom end is provided with an anchoring between the front frame (8) and the grid frame (9) obtained by means of bars (11) horizontally bent, with bearing blocks (12), positioned in the sides bottom ends, adding strength to the assembly.

3. Cattle feed rack according to precedent claims, characterized in that one or multiple windows (15) are mounted on the front frame (8), at a predetermined height from floor, in accordance with the type of cattle using the feed rack, having the means to optionally adjust the heigth of said windows (15) by means of a plate (16) arranged as a guillotine pattern.

4. Cattle feed rack according to precedent claims, characterized in that the front frame (8) bottom end is slightly spaced from floor, facing the horizontally bent bars (7).

5. Cattle feed rack, according to precedent claims, characterized in that the guide shape (2) leading to the rollers (13) comprises an U shape with vertical pieces provided with substantial recesses on a saw tooth pattern (3), with ramps arranged facing each other.

6. Cattle feed rack, according to precedent claims, characterized in that the rollers (13) may include interior or exterior floating latches (14).

7. Cattle feed rack, according to precedent claims, characterized in that to prevent that the movable device (7) could be pulled upwards a safety mechanism, such as a latch, is provided, preferably consisting of a shape (17) fixed to one side of said movable device, in such a manner that the handle ends (19) going through said shape (17) being positioned just below the longitudinal shapes (18) to enable the handle (19) being blocked by means of the thru bolt (20).

8. Cattle feed rack, according to precedent claims, characterized in that the windows (15) may be provided with several fixed bars (24) and with multiple movable bars (25).

9. Cattle feed rack, according to precedent claims, characterized in that the stationary sides (1) have adjustable height, by means of two sliding shapes positioned in lower ends, which can be fixed by means of a thru bolt introduced into matching holes once the required height has been set.

10. Cattle feed rack, according to precedent claimws, characterized in that two movable devices (7) can be positioned between the stationary sides (1), the food being stored between said movable devices.

11. Cattle feed rack, according to precedent claims, characterized in that said feed rack optionally can comprise a container (20), supported by multiple legs (27), having a rectangular or square base, its height being determined by the size of cattle using said feed rack, each side being provided with one or more windows (29) at a predetermined height, and in that a square or rectangular grid frame (30) is positioned facing said windows, said grid frame being anchored by means of two or more hinges (31).

12. Improved cattle feed rack, according to claim 11, characterized in that the grid frames (30) swing down by gravity, around the hinges, when the food acting as a support for said frames is consumed by the cattle.
